# NEW EUROPEAN PATENT SPECIFICATION

(11) **EP 0 188 531 B2**
(45) Date of publication and mention of the opposition decision: **11.08.1999**
(45) Mention of the grant of the patent: 07.04.1993
(21) Application number: 85903552.9
(22) Date of filing: 24.06.1985
(51) Int. Cl.: H02G 1/08

(54) **METHOD FOR INSTALLING CABLE USING AN INNER DUCT**
VERFAHREN ZUR MONTAGE EINES KABELS MITTELS EINER INNEREN LEITUNG
PROCEDE D'INSTALLATION D'UN CABLE UTILISANT UNE CONDUITE INTERNE

(30) Priority: 28.06.1984 US 625657; 21.05.1985 US 736359
(43) Date of publication of application: 30.07.1986
(73) Proprietor: ARNCO CORPORATION, Youngstown, OH 44502 (US)
(72) Inventor: CONTI, Allen, C., San Jose, CA 95128 (US); CONTI, Armand, R., Berlin Center, OH 44401 (US)
(74) Representative: Stringer, David Hiram
(86) International application number: US8501210
(87) International publication number: WO8600283

(56) References cited:
- EP-A- 0 076 207
- DD-A- 2 411 156
- DE-A- 1 415 474
- DE-A- 1 808 271
- DE-B- 2 840 711
- FR-A- 2 438 932
- GB-A- 523 820
- US-A- 2 382 966
- US-A- 3 240 233
- US-A- 3 363 879
- US-A- 3 496 605
- US-A- 3 666 389
- US-A- 4 048 807
- US-A- 4 101 114
- US-A- 4 111 820
- US-A- 4 331 322
- US-A- 4 337 922
- US-A- 4 411 409
- US-A- 4 412 673

## Description

This invention relates to a method and an apparatus to protectively install a transmission cable in a duct, and more particularly, to provide a bundle of inner ducts which embody a construction to facilitate installation in a pre-existing duct for protectively receiving a transmission cable.

It is common practice to replace sheathed cables, particularly telephone communication cables in existing ducts. Reuse of these ducts greatly reduces the cable placement operations, particularly where the existing cables traverse obstacles, whether man-made or natural, along a buried, submarine and/or aerial route. The use of existing ducts is also desirable where the route of the ducts is beneath city streets, residential or business property.

To avoid the costs and time to expose a duct and cable along a route, an existing cable can be pulled by a winch line from the duct. The replacement cable may embody improved technology, particularly the use of optical fibers for transmission of communication signals, hereinafter referred to as light-guide cable. When cable having metal conductors is replaced with light-guide cables, considerably less space in the duct is occupied by the replacement cables because the dlameter thereof is much less as compared with the diameter of the cable having metal conductors.

Light-guide cables can be placed in the sheathing of an existing cable after the conductors are removed from the sheathing while the existing cable remains in situ. A method for removing the conductors from the cable in this manner is disclosed in U.S.-A- 4,197,628 and provides for forcing lubricant through a sleeve which is attached to one end of the sheathing and allowing the lubricant to flow along the conductors in the cable. After the lubricant disperses in the sheathing, the conductors are withdrawn by applying a force to one end of the conductor. Light-guide cable may then be reintroduced into the sheathing.

The placement operation of light-guide cable into an existing duct which may include placing the cable in the sheathing from an existing cable, requires special procedures to avoid damage to the light-guide cable. In U.S.-A-4,458,880 and 4,508,317, there is disclosed a method and apparatus to measure tension imposed on a cable by a pull line in a conduit which includes a tension meter coupled between the cable and the pull line. The tension meter includes a load cell connected to electronic circuitry for delivering a tension signal which is detected and used to control tension imposed on the cable. The use of the tension meter enables accurate control of the tension on the pull line, particularly when the pull line contacts the conduit or duct walls at bends which restrain the pull line and then after the cable is drawn beyond the bend, friction of the cable against the duct walls acts to resist movement of the cable.

The strands of optical fiber in the light-guide cable are particularly susceptible to fatigue fractures due to an excursion of tension stress beyond a predetermined level, for example, about 2200 N. Should the tension stresses exceed the predetermined level or even the yield point of the optical fiber material, the fibers may fracture, thus losing integrity and, therefore, usefulness.

A method in which an inner duct and cable is installed in an outer duct is known from US-A-4 048 807; further EP-A-0 076 207 discloses a cover for housing conductors and which has external longitudinal ribs to aid its installation along a conduit.

For installing optical transmission cables in a selected length of an outer duct it is known (US-A-4 411 409) to select a bundle of inner ducts which can fit inside the outer duct and to install the bundle of inner ducts inside the outer duct for extending along the length thereof, wherein a pull line is installed at the leading end portion of each inner duct for pulling it into the outer duct. The inner ducts are hollow tubes which are not provided with any additional installation means for particularly protecting the optical transmission cables from damage during installation and for aiding the installation of the optical transmission cables in the outer duct.

Furthermore, for installing an electrical cable a conduit is known (GB-A-523 820) which comprises within the conduit internal corrugations for supporting the cable in order to allow venting and drainage of the conduit after installation of the cable. The conduit is a rigid outer duct which allows installation of the cable without the risk of deformation of the outer duct.

The object of the present invention as defined in claims 1 and 8 is to protect optical transmission cables and inner ducts from damage during installation and to aid the installation thereof in an outer duct by reducing friction and avoiding twisting

Improvements of this method and this apparatus, respectively, are subject matter of the corresponding dependent claims.

These features and advantages of the present invention as well as others will be more fully understood when the following description is read in light of the accompanying drawings, in which:
Fig. 1 is an elevational view, in section, illustrating the general organization of parts for installing a transmission cable in a duct according to the method of the present invention;
Fig. 2 is an isometric view of a duct in which inner ducts are installed, each for receiving a transmission cable according to the present invention;
Fig. 3 is an enlarged end view of an inner duct used in the present invention;
Fig. 4 is an enlarged partial sectional view of a duct containing an inner duct and a transmission cable to illustrate the formation of lubricant reservoirs;
Fig. 5 is an isometric view of an apparatus for pulling the inner ducts of the present invention in a duct; and
Fig. 6 is an isometric view of a connector fitting for joining the end of an inner duct to a pull cable.

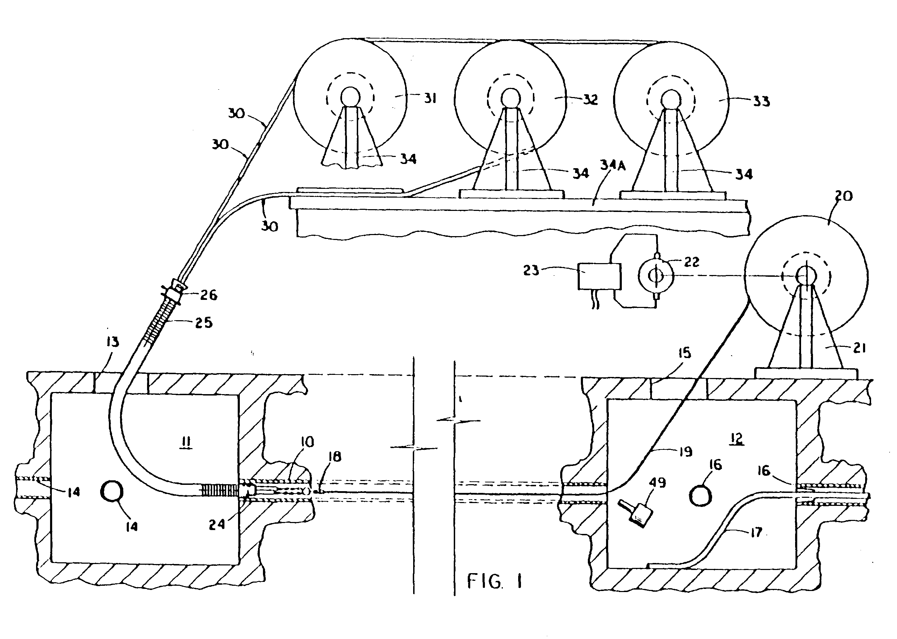

In Fig. 1, there is illustrated a typical arrangement of an underground duct 10 extending between underground work areas 11 and 12. As is conventional, the duct 10 provides a duct opening to protectively house a transmission cable. The duct may comprise part of an array of ducts, each having an opening to protectively house a transmission cable. Any existing transmission cable in the duct is removed in a manner, per se, well known in the art. Typically, for example, a winch line is connected to an end of an existing cable in one of the work areas 11 and 12 after which tension is applied to the winch line to withdraw the cable form the duct. If desired or necessary, the conductors may be removed from the casing of the existing cable according to the method disclosed in U.S.-A- 4,197,628. A manhole opening 13 provides access to work area 11. Other underground ducts generally indicated by reference numeral 14 extend underground and communicate with work area 11. Similarly, a manhole opening 15 provides access to work area 12 wherein other ducts 16 are accessible. A cable 17 may have a terminal end portion extending from one of the ducts 16 into the work area 12 for connection to a newly-installed cable in duct 10. A cable may extend from some distally-spaced work area through duct 14 to work area 11 and then to supply reel containing a sufficient quantity of cable, which can be unwound from the reel and fed into duct 10 so as to form an unbroken, continuing run of cable extending to work area 12.

To carry out the method of the present invention, a cable eye 18 on the leading end of a pull line 19 is fed from work area 12 through conduit 10 to work area 11. The pull line is unwound from a storage spool 20 which is rotatably supported by a stand 21 at ground level. The storage spool may be coupled to a motor drive 22 which is, in turn, connected to a control 23. Control 23 is of any suitable type for controlling the direction of rotation of the reel by the drive motor and can be used to control the tension developed on the pull line by rotation of the reel. A sufficient length of the pull line is unwound from the reel such that cable eye 18 can be passed through an adapter nozzle 24 and thence through a feeder tube 25. Tube 25 is preferably constructed in a manner disclosed in my U.S.-A- 4,296,157. The cable eye is then drawn through a lubricating collar 26 which preferably embodies a construction disclosed in U.S.-A-4,028,473 or 4,326,605 and coupled to a suitable supply of lubricant. As will be described in greater detail hereinafter, an inner duct apparatus is comprised of plastic material whereby the particularly effective lubricant to be applied to the outer surface of the inner duct during placement operation is a water-based polymer which will wet the plastic surface of the inner duct. This type of lubricant will adhere to the surface of the inner duct to insure the presence of effective quantities of lubricant during the placement operation. It is preferable to employ the lubricant embodying the composition disclosed in my U.S.-A-4,111,820. This lubricant consists of polypropylene glycol, polyethylene oxide and water. The lubricant composition is non-degrading to plastic material and, therefore, especially useful for lubricating the surface of the inner duct apparatus of the present invention as well as a plastic sheathed cable which will be placed in the inner duct.

As shown in Fig. 1, separate strands of inner duct 30 are supplied from three separate supply reels 31, 32 and 33, each supported by a stand 34 that is, in turn, arranged on a suitable support 34A such as the ground surface or preferably, the rear portion of a truck bed.

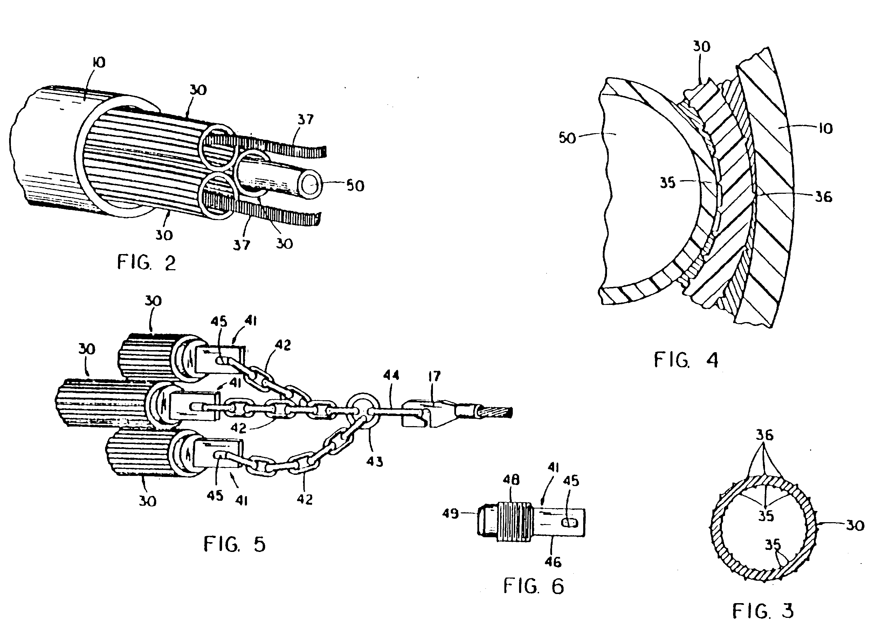

As shown in Fig. 3, the inner duct 30 has the form of an open-ended, elongated hollow tube with an endless side wall formed by extruding plastic material. The extruded configuration of the inner duct essentially includes a continuous inner surface comprised of spaced-apart and generally parallel protruding internal ribs 35. Sufficient ribs are formed, typically 4 per cm of internal wall surface, to retain a supply of lubricant between the ribs. The lubricant is drawn from the reservoir areas between the ribs to protruding edges of the ribs which form the only area of frictional contact with the transmission cable when installed in the inner duct. Preferably, the ribs have an inverted V-shaped configuration in cross section, as shown in Fig. 3. The protruding height of the ribs, preferably about 0,8 mm, is effective for the transmission of heat during cable placement operation and for preventing spiraling or twisting of cable while advanced along the internal ribs. The duct is produced by extruding plastic material and immediately after the extrusion process, the ribs rapidly dissipate heat from the newly-formed extrusion. This enhances the dimensional stability of the inner duct, particularly linearity and the tubular configuration. The ribs, therefore, serve to prevent the formation of an oval cross-sectional configuration to the inner duct which is undesirable because it impedes movement of the cable in an inner duct. Also, the enhanced cooling by the ribs prevents twisting of the inner duct along a selected length thereof when coiling and uncoiling. The plastic material of the inner duct 30 is preferably comprised of polyethylene. The side walls of the inner duct tube also have a continuous external surface comprised of spaced-apart and generally parallel protruding external ribs 36 extending lengthwise of the tube in a generally parallel and spaced-apart relation which is sufficient to contain a supply of lubricant between the ribs and form the only area of frictional contact with a duct while advanced therealong. The number of ribs 36 is generally 1,6 to 2 per cm of external wall surface. The external ribs differ as to their location relative to the internal ribs 35 such that generally a rib 35 and a rib 36 do not extend along a single radius. The non-aligned arrangement of ribs maintains dimensional stability of the inner duct. The ribs 36 also provide sites for dissipation of heat that may be generated during placement operation of the inner duct as well as dissipation of heat from ambient sources after the inner duct has been placed. Such ambient heat sources are usually discovered along a cable route in areas of the country having a warm climate.

A bundle of inner ducts in side-by-side relationship is drawn into a duct. Generally, as many inner ducts as possible are placed in a duct to fill and maintain the integrity of the duct even though, for example, only one light-guide cable may be placed in one of the plurality of inner ducts. In this way, when there is a need to expand the transmission capacity along the route of a transmission cable, additional lightguide cables can be placed in the unused openings of the inner ducts at some future time. It is intended by the design of the inner duct to place three inner ducts 30 in an existing duct such as shown in Fig. 2 of the drawings. The three inner ducts extend in a generally parallel relationship which is effectively maintained by an interlocking engagement between ribs 36. The ribs effectively maintain the triangular arrangement of inner ducts and prevent spiraling of the bundle of inner ducts while advanced along the duct during the placement operation. Spiraling, i.e., twisting of the ducts, one about the other, during advancement along a duct is particularly undesirable since the light-guide cable must follow the tortuous path of an inner duct. Preferably, a pull line 37 is installed in the inner duct before placement in a duct. After placement of the inner duct, a cable end is attached by a gripper, per se, known in the art, and the cable is pulled in the inner duct by the pull line. The pull line is preferably made up of warp and weft threads consisting of aromatic polyamide fibers as disclosed in U.S.-A- 4 508 317. The pull line is installed by attaching a plug to one end of the line and using compressed air or another suitable air supply to force the plug and line along a selected length of inner duct or, if desired, along the entire supply of inner duct on each of the supply reels 31, 32, and 33. The pull line can be severed when the selected length of inner duct is taken from a reel and severed from the remaining supply of inner duct. In the event a cable is pulled into one or more, but less than all of the inner ducts in a duct, the pull line in the unused inner duct can be permitted to remain therein until at some future time is desired to place a cable. At that time, the pull line can be used to install a cable in the remaining inner duct.

To carry out the installation process of a bundle of inner ducts, the cable eye 18 is attached by a chain link as shown in Fig. 5, to fitting 41, there being provided a fitting 41 for each inner duct. Three chains 42 are connected at one end of each chain to a coupling ring 43 which is, in turn, connected by a link 44 to the cable eye 18. The free ends of the chains are connected to an opening 45 in each of the fittings 41. The fittings, as shown in Fig. 6, each comprises an end portion 46 having the opening 45 therein which extends between parallel flat face surfaces. Portion 46 extends to a threaded shank portion 48 made up of coarse threads with sharp edges at the crest of the thread so that the fitting can be threadedly engaged in an inner duct by rotating the fitting. Preferably, the threads are of self-tapping design and to facilitate the threaded engagement of the fitting with an inner duct, protruding from the threaded portion of the fitting is a guide section 49 to maintain a generally coaxial relationship between the longitudinal axis of the fitting and the center of the inner duct As best shown Fig. 5, the opposed, flat face surfaces of portion 46 provide convenient areas for engagement with a wrench to apply torque for establishing threaded engagement with good integrity.

After a suitable length of a bundle of inner ducts as shown in Fig. 5 is connected to the pull line as just described, the tension reel is operated to pull the inner ducts in the duct 10. When a bundle of inner ducts is being installed in the duct and after the chains 42 have passed through the lubricating collar 26, the lubricant is delivered to the collar for application to the external surface of the inner duct. To prevent spiraling or twisting of one inner duct about other inner ducts in the bundle, the strands of inner duct unwound from the reels 31, 32, and 33 are preferably carried out by drawing a strand of inner duct from each of the reels 31, 32, and 33 by alternately pulling a strand from the top of the first reel, then pulling a strand from the bottom of the second reel and then pulling a strand from the top of the third reel when the reels are arranged as shown in Fig. 1. Alternating the unwinding sites from the top of one reel to the bottom of the next reel should be carried out when the external surface of the inner duct does not include ribs which, as described previously, produce an interlocking between the ducts and prevent spiraling. The ribs also prevent longitudinal twisting of the inner duct during installation in a duct. The pull cable is then advanced to draw three strands of the inner duct along the guide tube and through nozzles 24 into duct 10. As shown in Fig. 4, reservoirs of lubricant are established by the spaces between ribs 36 and from these reservoirs. lubricant is continuously fed to the protruding edge surfaces of the ribs to maintain an effective lubricant film between the inner duct and the duct 10. After the leading ends of the inner duct strands emerge from the duct 10 in work area 12, the pull line is disconnected from the coupling ring 43 and the fittings 41 are disconnected from the ends of the inner ducts. In work area 11, feeder tube 25 is retracted along with nozzle 24 from the duct 10 to expose the strands of inner duct which are then severed and the unwound lengths of inner duct strands in the guide tube 25 are returned to the reels by rewinding operations.

The transmission cable, which is preferably comprised of light-guide cable, is brought to the installation site in coiled form on a reel that is supported by a stand in the same manner as reels 31-33. The leading end of the light-guide cable is secured to a pull line. Preferably, there is arranged between the pull line and the cable, a tension meter to carry out the cable placement operation in accordance with the disclosures of U.S.-A-4,458,880 and 4,461,459. Tension is then applied to the pull line to advance the leading end of the light-guide cable through the lubricating collar 26 along the guide tube 25 and thence into one of the inner ducts. A detector 49, for example, is arranged in work area 12 to detect a tension signal produced by the tension meter. The detected signal is used for controlling tension imposed on the light-guide cable by the pull line. The presence of lubricant on the cable greatly reduces friction and thus the pulling force required to install the cable in the inner duct. It can be seen from Fig. 4, that the protruding ribs from the inner surface of the inner duct provide reservoir areas for lubricant which is supplied to the edges of the ribs to maintain an effective film of lubricant on the outer surface of the cable 50 while advanced in the inner duct 30. The ribs which, as described previously, extend along the length of the inner duct facilitate guiding and prevent twisting of the light-guide cable while advanced in the inner duct. After the leading end of the light-guide cable emerges from the inner duct at the site of work area 12, the pull line is disconnected and the usual connecting operations are carried out to join the light-guide cable to other cable to form part of a communication system. It is to be understood, of course, that another length of light-guide cable can be placed in other inner ducts which extend along duct 10. Such installation procedures are carried out by pulling each light-guide cable individually at dlfferent times through an inner duct.

## Claims

1. Method for installing optical transmission cables (50) in a selected length of an outer duct (10), in which a bundle of inner ducts (30) with walls of synthetic plastic material is selected which can fit inside the outer duct in order to accommodate an optical transmission cable in any of the inner ducts, and the bundle of inner ducts is installed inside the outer duct (10) to extend along the length thereof,
characterized by
each inner duct (30) of the bundle of inner ducts (30) having an external wall surface with ribs (36) protruding therefrom and having an internal wall surface with ribs (35) protruding therefrom, the ribs (36, 35) extending in the direction of the length of the inner duct (30), whereby the internal ribs (35) support the transmission cable (50) as it is inserted through the inner duct (30), thereby reducing the frictional contact between the inner duct and the transmission cable, and the external ribs (36) both support the inner duct (30) within the outer duct (10), and form an interlocking relationship with external ribs on adjacent inner ducts (30) to thereby reduce longitudinal twisting of the inner ducts (30) and the bundle of inner ducts (30), as the bundle of inner ducts (30) is pulled into the outer duct (10), a pull line (37) being installed in each inner duct (30) for pulling an optical transmission cable (50) therein.

2. Method as claimed in claim 1, characterized by introducing a lubricant into at least one inner duct (30) forming part of said bundle of inner ducts and establishing an effective amount of lubricant between said internal ribs (35) and said transmission cable (50).

3. Method as claimed in claim 1 or 2, characterized by introducing a lubricant into said outer duct (10) to fill spaces between said external ribs (36) at a leading end portion of each inner duct (30) member, establishing an effective amount of lubricant between said plurality of inner ducts (30) and said outer duct (10), and accomplishing said installing the bundle of inner ducts in the presence of said effective amount of lubricant.

4. Method according to claim 1, characterized by attaching one end of each inner duct member (30) to a fitting (41) and using a coupling member (42, 44) to interconnect each fitting with a pull line (19), wherein said fitting is threadedly engaged with an inner duct member.

5. Method according to one or more of claims 1 to 4, characterized by extruding plastic material to form a length of an inner duct (30) having a wall surface with protruding ribs (35, 36) extending in the direction of the length thereof to fit inside and extend along a selected length of said outer duct.

6. Method according to claim 5, characterized in that said step of extruding includes forming protruding ribs (35) along an internal surface of said inner duct (30).

7. Method according to claims 4 and 5, characterized in that said step of extruding includes forming protruding ribs (35, 36) along external and internal surfaces of said wall surface.

8. A tubular apparatus to protect optical transmission cables (50) from damage and to aid the installation of the apparatus within an outer duct (10), the apparatus comprising a bundle of elongated hollow tubes (30) with walls of synthetic plastic material, for installation together within said outer duct (10), each hollow tube forming an inner duct for receiving therein a transmission cable (50) after the installation of the bundle within the outer duct (10), characterized in that
each hollow tube (30) has a continuous internal surface comprised of spaced-apart, and generally parallel protruding internal ribs (35) extending along the length of the internal surface of the tube (30), the internal ribs (35) having a height and being spaced apart so as to be suitable to contain a supply of lubricant therebetween and so as to form the only area of contact with said transmission cable (50) when inserted through the hollow tube (30), and
a continuous external surface comprised of spaced apart and generally parallel protruding external ribs (36) extending along the length of the external surface of the hollow tube (30), the external ribs (36) having a height and being spaced apart a distance sufficient to contain a supply of lubricant therebetween and to form the only area of frictional contact with the outer duct (10) during installation, the external ribs (36) of adjacent hollow tubes (30) interlocking with each other to thereby reduce longitudinal twisting of the hollow tubes (30) and the said bundle of hollow tubes (30) during installation in the outer duct (10).

9. Tubular apparatus according to claim 8, characterized in that the internal and external ribs (35, 36) have an inverted V-shaped configuration which projects from said tube (30).

10. Tubular apparatus according to claim 8 or 9, characterized in that the hollow tube (30) has more internal ribs (35) than external ribs (36).

11. Tubular apparatus according to one of claims 8 to 10, characterized in that the internal and external ribs (35, 36) are widest at their bases and the internal ribs (35) and the external ribs (36) enhance the radial stability of the tube (30) so that it substantially maintains its shape during and after installation of the tube and the transmission cable (50).

12. Tubular apparatus according to claim 11, characterized in that the protruding internal and external ribs (35, 36) are made of the same synthetic plastic as the tube (30).

13. Tubular apparatus as claimed in any one of claims 8 to 12, wherein the plurality of tubes (30) are held in contact with each other by an external means.

14. Tubular apparatus as claimed in any one of claims 8 to 13, wherein the protruding ribs (35, 36) on the internal and external surfaces are at different radial locations, thus increasing the dimensional stability of the tubes (30).

15. Tubular apparatus as claimed in any one of claims 8 to 14, wherein the protruding height of the ribs (35, 36) is about 0,8 mm and that 4 internal ribs (35) are provided per cm of internal wall surface and that 1,6 to 2 external ribs (36) are provided per cm of external wall surface of the hollow tubes (30).

## Patentansprüche

1. Verfahren zum Einbau von Lichtübertragungskabeln (50) in eine ausgewählte Länge einer äußeren Leitung (10), bei welchem ein Bündel innerer Leitungen (30) mit Wänden aus synthetischem Kunststoffmaterial ausgewählt wird, welche in die äußere Leitung passen können, um ein Lichtübertragungskabel in irgendeiner der inneren Leitungen unterzubringen, und das Bündel innerer Leitungen in der äußeren Leitung (10) eingebaut wird, um sich entlang deren Länge zu erstrecken, dadurch gekennzeichnet, daß
jede innere Leitung (30) aus dem Bündel innerer Leitungen (30) eine Außenwandfläche mit davon vorspringenden Rippen (36) und eine Innenwandfläche mit davon vorspringenden Rippen (35) aufweist, wobei sich die Rippen (36, 35) in die Richtung der Länge der inneren Leitung (30) erstrecken, wobei die Innenrippen (35) das Übertragungskabel tragen, wenn es durch die innere Leitung (30) eingeführt wird, wodurch der Reibungskontakt zwischen der inneren Leitung und dem Übertragungskabel verringert wird, wobei die Außenrippen (36) sowohl die innere Leitung (30) innerhalb der äußeren Leitung (10) tragen als auch eine verriegelnde Verbindung mit den Außenrippen auf anstoßenden inneren Leitungen (30) bilden, um dadurch die Längsverdrallung innerer Leitungen (30) und des Bündels innerer Leitungen (30) zu verringern, wenn das Bündel innerer Leitungen (30) in die äußere Leitung (10) gezogen wird, wobei eine Zugschnur (37) in jeder inneren Leitung (30) angeordnet wird, um ein Lichtübertragungskabel (50) darin zu ziehen.

2. Verfahren gemäß Anspruch 1, dadurch gekennzeichnet, daß ein Schmiermittel in wenigstens eine innere Leitung (30), welche ein Teil des Bündels innerer Leitungen bildet, eingeführt wird und eine wirksame Menge Schmiermittel zwischen die Innenrippen (35) und das Übertragungskabel (50) gebracht wird.

3. Verfahren gemäß Anspruch 1 oder 2, dadurch gekennzeichnet, daß ein Schmiermittel in die äußere Leitung (10) eingeführt wird, um die Räume zwischen den Außenrippen (36) an einem vorderen Endbereich jedes inneren Leitungselementes (30) zu füllen, daß eine wirksame Menge Schmiermittel zwischen die Vielzahl innerer Leitungen (30) und die äußere Leitung (10) gebracht wird, und daß der Einbau des Bündels innerer Leitungen in Anwesenheit der wirksamen Menge Schmiermittel vollendet wird.

4. Verfahren gemäß Anspruch 1, dadurch gekennzeichnet, daß ein Ende jedes inneren Leitungselementes (30) an einem Anschlußstück (41) befestigt wird und ein Kupplungsglied (42, 44) verwendet wird, um jedes Anschlußstück an eine Zugschnur (19) anzuschließen, wobei das Anschlußstück gewindeartig mit einem inneren Leitungselement in Eingriff gebracht wird.

5. Verfahren gemäß einem oder mehreren der Ansprüche 1 bis 4, dadurch gekennzeichnet, daß Kunststoffmaterial extrudiert wird, um eine Länge einer inneren Leitung (30) zu bilden, welche eine Wandfläche mit vorspringenden Rippen (35, 36) aufweist, welche sich in der Richtung deren Länge erstrecken, um sich einzupassen und sich entlang einer ausgewählten Länge der äußeren Leitung zu erstrecken.

6. Verfahren gemäß Anspruch 5, dadurch gekennzeichnet, daß der Schritt des Extrudierens die Bildung vorspringender Rippen (35) entlang einer Innenfläche der inneren Leitung (30) umfaßt.

7. Verfahren gemäß den Ansprüchen 4 und 5, dadurch gekennzeichnet, daß der Schritt des Extrudierens die Bildung vorspringender Rippen (35, 36) entlang einer Außen- und Innenfläche der Wandfläche umfaßt.

8. Röhrenförmiges Gerät zum Schutz von Lichtübertragungskabeln (50) vor Beschädigung und zur Erleichterung des Einbaus des Gerätes innerhalb einer äußeren Leitung (10), wobei das Gerät ein Bündel länglicher hohler Röhren (30) aus synthetischem Kunststoffmaterial zum gemeinsamen Einbau innerhalb der äußeren Leitung (10) aufweist, wobei jede hohle Röhre eine innere Leitung bildet, um darin ein Übertragungskabel (50) nach dem Einbau des Bündels innerhalb der äußeren Leitung (10) aufzunehmen, dadurch gekennzeichnet, daß
jede hohle Röhre (30) eine durchgehende Innenfläche bestehend aus beabstandeten und allgemein parallelen Innenrippen (35) aufweist, welche sich entlang der Länge der Innenfläche der Röhre (30) erstrecken, wobei die Innenrippen (35) eine derartige Höhe haben und derart beabstandet sind, daß sie geeignet sind, dazwischen eine Schmiermittelversorgung zu enthalten, und daß sie den einzigen Berührungsbereich mit dem Übertragungskabel (50) bilden, wenn es durch die hohle Röhre (30) eingeführt wird, und
eine durchgehende Außenfläche bestehend aus beabstandeten und allgemein vorspringenden Außenrippen (36), welche sich entlang der Länge der Außenfläche der hohlen Röhre (30) erstrecken, wobei die Außenrippen (36) eine ausreichende Höhe haben und mit einem ausreichenden Abstand voneinander angeordnet sind, um eine Schmiermittelversorgung dazwischen zu enthalten und den einzigen Bereich eines Reibungskontaktes mit der äußeren Leitung (10) während des Einbaus zu bilden, wobei die Außenrippen (36) anstoßender hohler Röhren (30) sich miteinander verblocken, um dadurch eine Längsverdrallung der hohlen Röhren (30) und des Bündels hohler Röhren (30) während des Einbaus der äußeren Leitung (10) zu verringern.

9. Röhrenförmiges Gerät gemäß Anspruch 8, dadurch gekennzeichnet, daß die Innen- und Außenrippen (35, 36) eine Konfiguration einer umgekehrten V-Form aufweisen, welche von der Röhre (30) vorspringt.

10. Röhrenförmiges Gerät gemäß Anspruch 8 oder 9, dadurch gekennzeichnet, daß die hohle Röhre (30) mehr Innenrippen (35) als Außenrippen (36) aufweist.

11. Röhrenförmiges Gerät gemäß einem der Ansprüche 8 bis 10, dadurch gekennzeichnet, daß die Innen- und Außenrippen (35, 36) am breitesten an ihren Basen sind und die Innenrippen (35) und die Außenrippen (36) die radiale Stabilität der Röhre (30) erhöhen, so daß sie im wesentlichen ihre Form während und nach des Einbaus der Röhre und des Übertragungskabels (50) beibehält.

12. Röhrenförmiges Gerät gemäß Anspruch 11, dadurch gekennzeichnet, daß die vorspringenden Innen- und Außenrippen (35, 36) aus demselben synthetischen Kunststoff wie die Röhre (30) hergestellt sind.

13. Röhrenförmiges Gerät gemäß irgendeinem der Ansprüche 8 bis 12, bei welchem die Vielzahl von Röhren (30) durch eine äußere Vorrichtung miteinander in Kontakt gehalten wird.

14. Röhrenförmiges Gerät gemäß irgendeinem der Ansprüche 8 bis 13, bei welchem sich die vorspringenden Rippen (35, 36) auf der Innen- und Außenfläche an verschiedenen radialen Stellen befinden, wodurch die dimensionale Stabilität der Röhren (30) erhöht wird.

15. Röhrenförmiges Gerät gemäß irgendeinem der Ansprüche 8 bis 14, bei welchem die vorspringende Höhe der Rippen (35, 36) ca. 0,8 mm beträgt, und 4 Innenrippen (35) pro cm Innenwandfläche und 1,6 bis 2 Außenrippen (36) pro cm Außenwandfläche der hohlen Röhren (30) angeordnet sind.

## Revendications

1. Procédé pour la mise en place du câble de transmission optique (50) dans un tronçon sélectionné d'une conduite externe (10, dans lequel un faisceau de conduite interne (30) avec des parois en un matériau plastique synthétique sélectionné et peuvent être insérés à l'intérieur de la conduite externe et le faisceau de conduite interne est mis en place dans l'intérieur de la conduite externe (10) sur toute sa longueur caractérisé en ce que
chaque conduite interne (30) du faisceau de conduite interne (30) présentant une surface de paroi externe avec des nervures (36) faisant saillies à partir de celles-ci et comportant une surface de paroi interne avec des nervures (35) faisant saillies, les nervures (36, 35) s'étendant dans la direction de la longueur de la conduite interne (30), de sorte que les nervures internes (35) supportent le câble de transmission (50) lorsqu'il est introduit dans la conduite interne (30) révisant ainsi le contact par friction entre la conduite interne et le câble de transmission et les nervures externes (36) supportent la conduite interne (30) à l'intérieur de la conduite externe (10), et forment une relation d'interverrouillage avec les nervures externes sur les conduites internes contiguës (30) réduisant ainsi la torsion longitudinale des conduites internes (30) et le faisceau de conduite interne (30) lorsque le faisceau de conduite interne (30) est introduit dans la conduite externe (10), une ligne de traction (37) étant mise en place dans chaque conduite interne (30)pour tirer un câble de transmission optique (50).

2. Procédé selon la revendication 1, caractérisé par l'introduction d'un lubrifiant dans au moins une conduite interne (30) faisant partie d'un faisceau de conduite interne et établissant une quantité efficace de lubrifiant entre les nervures internes (35) et le câble de transmission (50).

3. Procédé selon la revendication 1 ou 2, caractérisé par l'introduction d'un lubrifiant dans la conduite externe (10) pour remplir les espaces entre les nervures externes (36) au niveau d'une portion de bord d'attaque de chaque élément de conduite interne (30), établissant une quantité efficace de lubrifiant entre la pluralité des produits internes (30) et la conduite externe (10), et mise en place du faisceau de conduite interne en présence de la quantité efficace de lubrifiant.

4. Procédé selon la revendication 1, caractérisé par la fixation d'une extrémité de chaque élément de conduite interne (30) sur un raccord (41) et en utilisant un élément de couplage (42, 44) ou interconnecter chaque raccord avec une ligne de traction (19), le raccord étant engagé par filetage avec un élément de conduite interne.

5. Procédé selon plusieurs des revendications 1 à 4, caractérisé par l'extrusion de matériau plastique pour former une longueur d'une conduite interne (30) avec une surface de paroi présentant des nervures en saillies (35, 36) s'étendant dans la direction de la longueur et s'engageant à l'intérieur et s'étendant sur une longueur sélectionnée de conduite extérieure.

6. Procédé selon la revendication 5, caractérisé en ce que l'étape d'extrusion comprend la formation de nervures en saillies (35) le long d'une surface interne de la gaine interne (30).

7. Procédé selon les revendications 4 et 5, caractérisé en ce que l'étape d'extrusion comprend la formation de nervures en saillies (35,36) le long des surfaces externe et interne de la surface de paroi.

8. Appareil tubulaire destiné à protéger le câble de transmission vis-à-vis des détériorations à l'intérieur d'une conduite (10), l'appareil comprenant un tube creux (30) allongé ouvert sur une extrémité avec une paroi latérale réalisé en un matériau plastique synthétique et une surface interne continue constituée par des nervures internes (35) faisant saillies et espacées entre elles et de façon générale parallèles s'étendant sur la longueur de la surface interne du tube, les nervures internes de la surface interne du tube, les nervures internes (35) ayant une hauteur et étant espacées entre elles de façon à y contenir une alimentation en lubrifiant et former la seule zone de contact par friction avec le câble de transmission lorsqu'il est en place à l'intérieur du tube.

9. Appareil tubulaire selon la revendication 11, dans lequel les nervures internes et externes ont une configuration en V inversée qui fait saillie à partir du tube.

10. Appareil tubulaire selon la revendication 8 ou 9, caractérisé en ce que le tube creux (30) présente un plus grand nombre de nervures internes (35) que de nervures externes (36).

11. Appareil tubulaire selon l'une des revendications 8 à 10, caractérisé en ce que les nervures internes et externes (35, 36) sont plus larges sur leurs bases et les nervures internes (35) et les nervures externes (36) augmentent la stabilité radiale du tube (30) de sorte qu'il maintient sensiblement sa forme pendant et après la mise en place du tube et du câble de transmission (50).

12. Appareil tubulaire selon la revendication (11), caractérisé en ce que les nervures internes et externes en saillies (35,36) sont réalisées à partir du même plastique synthétique que le tube (30).

13. Appareil tubulaire selon l'une quelconque des revendications 8 à 12, caractérisé en ce que la pluralité de tubes (30) sont maintenus en contact entre eux par un moyen externe.

14. Appareil tubulaire selon l'une quelconque des revendications 8 à 13, dans lequel les nervures en saillies (35,36) sur les surfaces internes et externes sont toutes en des positions radiales différentes augmentant la stabilité dimensionnelle des tubes (30).

15. Appareil tubulaire selon l'une quelconque des revendications 8 à 14, dans lequel la hauteur en saillie des nervures (35,36) est d'environ 0,8 mm et en ce que les nervures internes (35) sont agencées tous les centimètres de surface de paroi interne et en ce que 1,6 à 2 nervures externes (36) sont agencées par centimètre de surface de paroi externe des tubes creux (30).
